# EUROPEAN PATENT SPECIFICATION

(11) **EP 0 621 145 B1**
(45) Date of publication and mention of the grant of the patent: **15.10.1997**
(21) Application number: 94201792.2
(22) Date of filing: 15.08.1991
(51) Int. Cl.: B60G 13/00, F16B 2/06

(54) **Knuckle bracket**
Befestigungsbügel
Bride de fixation

(30) Priority: 15.08.1990 JP 86055/90; 31.10.1990 JP 114202/90
(43) Date of publication of application: 26.10.1994
(62) Divisional of application: 91307548.7
(73) Proprietor: Kayaba Kogyo Kabushiki Kaisha, Tokyo (JP)
(72) Inventor: Ohta, Akihisa, Kani-shi, Gifu (JP)
(74) Representative: Price, Paul Anthony King

(56) References cited:
- DE-A- 3 932 329
- DE-U- 8 517 424
- US-A- 3 941 401
- US-A- 4 618 162
- US-A- 4 753 462
- US-A- 4 948 160
- PATENT ABSTRACTS OF JAPAN vol. 7, no. 157 (M-227) (1302) 9 July 1983 & JP-A-58 063 506 (NISSAN JIDOSHA) 15 April 1983
- PATENT ABSTRACTS OF JAPAN vol. 6, no. 45 (M-118) (923) 20 March 1982 & JP-A-56 160 442 (TOKIKO) 10 December 1981

## Description

The present invention relates to a knuckle bracket for use in mounting a strut type shock absorber which is disposed between a vehicle body and a wheel in order to support the vehicle body and absorb energy such as vibration from the road surface.

A strut type shock absorber comprises an outer shell and a shock absorber inserted into the outer shell. A lower portion of the outer shell is connected to a wheel of a vehicle while being supported by a knuckle bracket.

Known knuckle brackets of this type are disclosed in Japanese Utility Model Publication No. 13790/86, U.S. Patent No. 4,491,339 and Japanese Patent Laid Open No. 160442/81, and the structure shown in Fig. 4 attached hereto is a typical prior art structure.

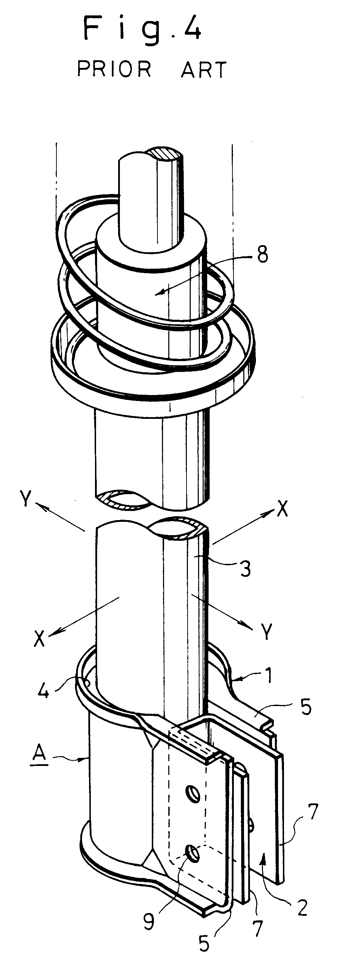

The knuckle bracket illustrated in Fig. 4 and indicated at A comprises an outer bracket 1 and an inner bracket 2. The outer bracket 1 comprises a loop portion 4 which extends around an outer shell 3 and a pair of clamp portions 5, 5 extending in parallel from the loop portion 4. The inner bracket 2 comprises a curved backrest portion 6 which is in abutment with the outer shell 3 and a pair of support pieces 7, 7 extending in parallel from the backrest portion 6.

A lower portion of the outer shell 3 with a shock absorber 8 inserted therein is located within the loop portion 4 of the outer bracket 1, and the support pieces 7, 7 of the inner bracket 2 are clamped by the clamp portions 5, 5 of the outer bracket 1 while the backrest portion 6 of the inner bracket 2 is kept in abutment with the outer shell 3. The clamp portions 5 and the support pieces 7 are clamped together with bolts inserted into bolt holes 9.

However, when a shock input from the road surface is large, a bending load acting in a lateral direction X-X or a longitudinal direction Y-Y in Fig. 4 is imposed on the outer shell 3 or the knuckle bracket A. In the case of a lateral load, the clamp portions 5, 5 and the support pieces 7, 7 of the knuckle bracket A may become opened and deformed; as a result, there is a possibility that the knuckle bracket A will tilt or come off the outer shell 3.

German Petty Patent DE-U-8517424 published in 1985 proposes modifying the above-described known knuckle bracket by incorporating an outwardly-bent extension to the top of the backrest portion. The support pieces are extended upwards to meet the sides of the backrest extension.

In U.S. Patent No. (US-A)4,618,162 (published 1986), there is disclosed a device which adjusts wheel camber on strut-type vehicle wheel suspensions. The device is used in conjunction with the knuckle bracket. Its components include a retaining washer which rests on top of the clamp portions of the outer bracket and a wedge member which slides up and down inside the inner bracket.

According to the present invention, there is provided a knuckle bracket for mounting on a cylindrical item such as a shock absorber, said knuckle bracket comprising: an outer bracket having a loop portion, for receiving therein the cylindrical item, and a pair of clamp portions extending substantially in parallel from said loop portion; an inner bracket having a curved backrest portion and a pair of support pieces extending substantially in parallel from said backrest portion, said support pieces being inserted between and clampable to said clamp portions of said outer bracket and said backrest portion being abuttable against the cylindrical item; and a reinforcing bracket which comprises a first wall which (i) extends at least across the gap between said support pieces and (ii) acts as a reinforcement to resist splaying apart of said support pieces; characterized in that said first wall is located between the ends of said inner bracket and is substantially parallel to the longitudinal axis of said curved backrest portion.

The knuckle bracket of the present invention is capable of bearing lateral and longitudinal loads imposed on the shock absorber. This prevents opening and deformation of the clamp portions and support pieces and tilting of the knuckle bracket.

Possible designs of reinforcing brackets may include: a bulge in a middle part of the backrest portion of the inner bracket; a cutout piece cut out of one of the clamp portions and extending through a cutout opening in one of the support pieces to the other one of the support pieces or the other one of the clamp portions; and a substantially U-shaped bracket located between the support pieces, with the free ends of the arms of the substantially U-shaped bracket pointing towards the backrest portion.

When a longitudinal load is applied to the shock absorber, the front and rear outer peripheral portions of the shock absorber are supported by the loop portion of the outer bracket and the backrest portion of the inner bracket. When a lateral load is applied to the shock absorber, the loop portion of the outer bracket supports the outer peripheral side faces of the shock absorber. At this time, the support pieces of the inner bracket are prevented from being opened in the lateral direction by means of the first wall of the reinforcing bracket.

The invention will now be described by way of non-limiting embodiments with reference to the accompany drawings, in which:-
Fig. 1 is a perspective view of a knuckle bracket according to an embodiment of the present invention;
Fig. 2 is a perspective view of a knuckle bracket according to a further embodiment of the present invention;
Fig. 3 is a perspective view of a knuckle bracket according to a still further embodiment of the present invention; and
Fig. 4 is a perspective view of a conventional knuckle bracket.

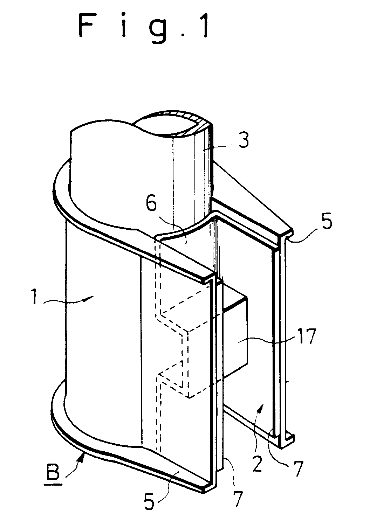

Figs. 1 to 3 illustrate embodiments of the present invention. The basic construction of the knuckle brackets B according to these three embodiments is the same as for the prior art knuckle bracket A illustrated in Fig. 4. Typically, each knuckle bracket B comprises an outer bracket 1 and an inner bracket 2. The outer bracket 1 comprises a loop portion serving as a socket for receiving a cylindrical member and a pair of clamp portions 5, 5 extending in parallel from the loop portion, while the inner bracket 2 comprises a curved backrest portion 6 and a pair of support pieces 7, 7 extending in parallel from the backrest portion 6.

Into the loop portion of the outer bracket 1 is inserted a lower portion of an outer shell 3 of a strut type shock absorber, and the backrest 6 of the inner bracket 2 is in abutment with the front-facing outer periphery of the outer shell 3.

The clamp portions 5, 5 of the outer bracket 1 and the support pieces 7, 7 of the inner bracket 2 interposed between the clamp portions are clamped together with bolts inserted into bolt holes 9.

Referring now to Fig. 1, a reinforcing bracket 17 is provided integrally with the backrest portion of the inner bracket.

The reinforcing bracket 17 is formed by bending an intermediate part of the backrest portion 6 of the inner bracket 2 so as to form a bulge between the support pieces 7, 7. Both side faces of the reinforcing bracket 17 are welded to inner surfaces of the support pieces 7, 7. The reinforcing bracket 17, in cooperation with bolts, or alone, prevents the support pieces 7, 7 from being opened.

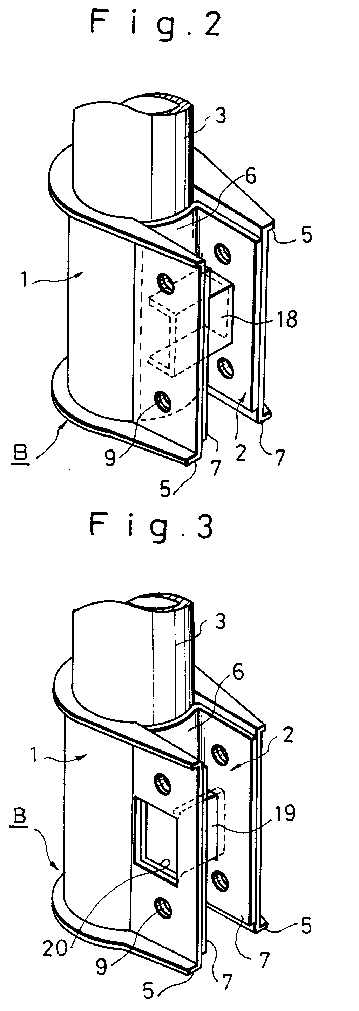

Referring now to Fig. 2, a reinforcing bracket 18 improved over that shown in Fig. 1 is used. More specifically, both end faces of the reinforcing bracket 18 which is bent centrally are welded to the opposed side faces of the support pieces 7, 7 to prevent opening of the support pieces.

Referring now to Fig. 3, there is illustrated a knuckle bracket according to a still further embodiment of the present invention, in which a middle part of one clamp portion 5 of an outer bracket 1 is cut out to form a cutout piece and this cutout piece is utilized as a reinforcing bracket 19. The reinforcing bracket 19 is bent laterally through an opening 20 of one support piece 7 and an end portion thereof is welded to an inner surface of the other support piece 7. Even when a lateral load is imposed on the support pieces 7, 7, the reinforcing bracket prevents the support pieces from being opened in that lateral direction, in cooperation with bolts or alone.

The following effects are attained by the present invention.
(1) Since a reinforcing bracket is mounted at least between a pair of support pieces of an inner bracket, even when a lateral load is imposed on the support pieces from, for example, a shock absorber passing through the bracket, the reinforcing bracket bears the load and prevents the support pieces from being opened, whereby deformation, tilting and disengagement of the knuckle bracket are prevented.
(2) Since the basic form of an outer bracket and an inner bracket are the same as in the prior art and what is required is the mere addition thereto of a reinforcing bracket of simple structure, the invention is easy and cheap to implement.
(3) In the prior art, resistance against deformation can be increased by increasing the wall thickness of the inner and outer brackets and the outer shell, but by using the reinforcing bracket of the present invention it is not necessary to increase the wall thickness of the inner and outer brackets and outer shell, and thus it is possible to attain a reduction in weight. Alternatively, with the present invention, the provision of a reinforcing bracket permits a decrease in wall thickness of the prior art outer shell and inner and outer brackets, whereby a reduction in weight can be attained.

## Claims

1. A knuckle bracket (B) for mounting on a cylindrical item such as a shock absorber (3), said knuckle bracket (B) comprising:-
an outer bracket (1) having a loop portion, for receiving therein the cylindrical item (3), and a pair of clamp portions (5) extending substantially in parallel from said loop portion;
an inner bracket (2) having a curved backrest portion (6) and a pair of support pieces (7) extending substantially in parallel from said backrest portion (6), said support pieces (7) being inserted between and clampable to said clamp portions (5) of said outer bracket (1) and said backrest portion (6) being abutable against the cylindrical item (3); and
a reinforcing bracket (17, 18, 19) which comprises a first wall which (i) extends at least across the gap between said support pieces (7) and (ii) acts as a reinforcement to resist splaying apart of said support pieces (7);
characterized in that said first wall is located between the ends of said inner bracket (2) and is substantially parallel to the longitudinal axis of said curved backrest portion (6).

2. A knuckle bracket (B) according to claim 1, wherein said reinforcing bracket (17) comprises a bulge in a middle part of said backrest portion (6) of said inner bracket (2).

3. A knuckle bracket (B) according to claim 1, wherein said reinforcing bracket (19) comprises a cutout piece cut out of one of said clamp portions (5) and extending through a cutout opening (20) in one of said support pieces (7) to the other one of said support pieces (7) or the other one of said clamp portions (5).

4. A knuckle bracket (B) according to claim 1, wherein said reinforcing bracket (18) comprises a substantially U-shaped bracket (18) located between said support pieces (7), with the free ends of the arms of said substantially U-shaped bracket pointing towards said backrest portion (6).

5. An assembly of a knuckle bracket (B) according to any one of claims 1 to 4 and a shock absorber (3), wherein said shock absorber (3) is located in said loop portion and said backrest portion (6) abuts against said shock absorber (3).

## Patentansprüche

1. Befestigungsbügel (B) zur Befestigung auf einem zylindrischen Gegenstand, wie einem Stoßdämpfer (3) mit
einem äußeren Bügel (1) mit einem Schleifenabschnitt zur Aufnahme des zylindrischen Gegenstandes (3) darin und einem Paar von Klammerabschnitten (5), die sich im wesentlichen parallel von dem Schleifenabschnitt aus erstrecken,
einem inneren Bügel (2) mit einem gekrümmten Stützabschnitt (6) und einem Paar von Trageteilen (7), die sich im wesentlichen parallel von dem Stützabschnitt (6) aus erstrecken, wobei diese Trageteile (7) zwischen den Klammerabschnitten (5) des äußeren Bügels (1) eingesetzt sind und mit ihnen verklammerbar sind, und wobei der Stützabschnitt (6) an dem zylindrischen Gegenstand (3) anliegen kann, und
einem Verstärkungsbügel (17, 18, 19), der eine erste Wand umfaßt, welche (i) sich wenigstens über den Spalt zwischen den Trageteilen (7) erstreckt und (ii) als eine Verstärkung wirkt, um einem Abspreizen von den Trageteilen (7) weg zu widerstehen,
**dadurch gekennzeichnet**, daß die erste Wand zwischen den Enden des inneren Bügels (2) angeordnet ist und im wesentlichen parallel zu der Längsachse des gekrümmten Stützabschnittes (6) ist.

2. Befestigungsbügel (B) nach Anspruch 1, bei dem der Verstärkungsbügel (17) eine Aufbauchung in einem Mittelteil des Stützabschnittes (6) des inneren Bügels (2) umfaßt.

3. Befestigungsbügel (B) nach Anspruch 1, bei dem der Verstärkungsbügel (17) ein Ausschnittstück umfaßt, das aus einem der Klammerabschnitte (5) ausgeschnitten ist und sich durch eine Ausschnittöffnung (20) in einem der Trageteile (7) zu dem anderen der Trageteile (7) oder zu dem anderen der Klammerabschnitte (5) erstreckt.

4. Bestigungsbügel (B) nach Anspruch 1, bei dem der Verstärkungsbügel (18) einen im wesentlichen U-förmigen Bügel (18) umfaßt, der zwischen den Trageteilen (7) angeordnet ist, wobei die freien Enden der Schenkel dieses im wesentlichen U-förmigen Bügels zu dem Stützabschnitt (6) hin gerichtet sind.

5. Anordnung eines Befestigungsbügels (B) nach einem der Ansprüche 1 bis 4 und eines Stoßdämpfers (3), bei der dieser Stoßdämpfer (3) im Schleifenabschnitt angeordnet ist und der Stützabschnitt (6) an dem Stoßdämpfer (3) anliegt.

## Revendications

1. Bride de fixation articulée (B) pour le montage sur un article cylindrique tel qu'un amortisseur (3), ladite bride de fixation articulée (B) comprenant:
une bride de fixation externe (1) comportant une portion formant une boucle pour que vienne s'y loger l'article cylindrique (3), et une paire de portions de serrage (5) s'étendant essentiellement parallèlement à ladite portion formant une boucle;
une bride de fixation interne (2) comportant une portion courbe de siège (6) et une paire d'éléments de support (7) s'étendant essentiellement parallèlement à ladite portion de siège (6), lesdits éléments de support (7) étant insérés entre lesdites portions de serrage (5) de ladite bride de fixation externe (1) et étant à même d'être serrés par ces dernières, ladite portion de siège (6) étant à même de venir buter contre l'article cylindrique (3); et
une bride de fixation de renforcement (17, 18, 19) qui comprend une première paroi qui (i) s'étend au moins sur l'espace aménagé entre lesdits éléments de support (7) et (ii) fait office de renforcement pour résister à l'évasement desdits éléments de support (7) l'un par rapport à l'autre;
caractérisée en ce que ladite première paroi est située entre les extrémités de ladite bride de fixation interne (2) et est essentiellement parallèle à l'axe longitudinal de ladite portion courbe de siège (6).

2. Bride de fixation articulée (B) selon la revendication 1, dans laquelle ladite bride de fixation de renforcement (17) comprend un renflement dans la partie médiane de ladite portion de siège (6) de ladite bride de fixation interne (2).

3. Bride de fixation articulée (B) selon la revendication 1, dans laquelle ladite bride de fixation de renforcement (19) comprend une pièce découpée d'une desdites portions de serrage (5) et s'étendant à travers une ouverture découpée (20) pratiquée dans un desdits éléments de support (7) jusqu'à l'autre desdits éléments de support (7) ou jusqu'à l'autre desdites portions de serrage (5).

4. Bride de fixation articulée (B) selon la revendication 1, dans laquelle ladite bride de fixation de renforcement (18) comprend une bride de fixation (18) essentiellement en U insérée entre lesdits éléments de support (7), les extrémités libres des bras de ladite bride de fixation essentiellement en U pointant en direction de ladite portion de siège (6).

5. Assemblage d'une bride de fixation articulée (B) selon l'une quelconque des revendications 1 à 4 et d'un amortisseur (3), dans lequel ledit amortisseur (3) est logé dans ladite portion formant une boucle et ladite portion de siège (6) vient buter contre ledit amortisseur (3).
